# EUROPEAN PATENT SPECIFICATION

(11) **EP 4 033 125 B1**
(45) Date of publication and mention of the grant of the patent: **27.11.2024**
(21) Application number: 22151905.1
(22) Date of filing: 18.01.2022
(51) Int. Cl.: F16N 31/00, F16H 57/04

(54) **A DEVICE AND METHOD FOR CHANGING TECHNICAL FLUID OF AN AUTOMATIC TRANSMISSION**
VORRICHTUNG UND VERFAHREN ZUR ÄNDERUNG DER TECHNISCHEN FLÜSSIGKEIT EINES AUTOMATISCHEN GETRIEBES
DISPOSITIF ET PROCÉDÉ PERMETTANT DE MODIFIER UN FLUIDE TECHNIQUE D'UNE TRANSMISSION AUTOMATIQUE

(30) Priority: 26.01.2021 EE 202100002
(43) Date of publication of application: 27.07.2022
(73) Proprietor: Hõbenool OÜ, 75312 Harju maakond (EE)
(72) Inventor: Riim, Jürgen, 76905 Harju maakond (EE); Riim, Märten, 44204 Lääne-Viru maakond (EE)
(74) Representative: Aaltonen, Janne Lari Antero

(56) References cited:
- JP-A- 2008 025 784
- US-A1- 2001 047 907
- US-A1- 2020 096 095
- US-B2- 6 585 889

## Description

### TECHNICAL FIELD

This invention belongs to the field of solutions for flushing hydraulic systems, especially to the field of changing technical fluid of transmissions, and relates to a device and method for changing technical fluid of an automatic transmission and for cleaning an automatic transmission.

### BACKGROUND

Fluids used as technical fluids in hydraulic systems are known in the state of art which comprise oil as a base and different additives for ensuring the operational reliability of a hydraulic system. E.g., fluids are known as technical fluids of automatic transmissions which contain approximately 70%-80% of base oil and in addition to that, different additives depending on the type of automatic transmission. During the operation of an automatic transmission, the properties of technical fluid degrade due to tear and wear of its different elements and high operating temperatures, the volume of technical fluid in the automatic transmission decreases and particles caused by tear and wear are released into technical fluid. In order to ensure a trouble-free operation of an automatic transmission, technical fluid needs to be replaced.

If technical fluid is replaced with conventional methods, i.e., a static method with an automatic transmission at rest or a dynamic method with an automatic transmission in operation, where the used technical fluid is allowed to drain out from the automatic transmission, the main problem is that all the dirty used technical fluid cannot be removed from the automatic transmission and the wear particles containing in the used technical fluid that remains in the automatic transmission are increasingly wearing it out. What is more, changing technical fluid by means of the described dribble method is inconvenient as the used technical fluid needs to be collected in a separate collection tank.

In addition to conventional methods for changing technical fluid, also devices are used that are described on the web page www.automatikoelwechselsystem.de. During operation, a constant inflow of technical fluid takes place in the automatic transmission and depending on the type of automatic transmission, all or part of the technical fluid is continuously pumped through the automatic transmission to the cooling system. In order to change technical fluid, cooling system pipes of the automatic transmission are disconnected and a device for changing technical fluid is connected in between. When the vehicle is started, it continuously pumps technical fluid toward the cooling system, but in the process of changing technical fluid, the circulation of technical fluid is disrupted and used technical fluid is directed to the collection tank of the changing device. Once the outflow of technical fluid from the automatic transmission ends, the engine of the vehicle is stopped. Depending on the type of automatic transmission only about 30-60% of technical fluid has been pumped out by that time, so in order to retrieve from the automatic transmission the rest of the used technical fluid, it is forced out with new technical fluid. For that, the pump of the device for changing technical fluid is started and new technical fluid is pumped in the automatic transmission crankcase. After that, the engine of the vehicle is started and the vehicle is driven on a lifting ramp, as a result of which the pump of the automatic transmission is fed with new technical fluid and by means of that, the automatic transmission itself forces the used technical fluid out. The process is usually run as long as the new technical fluid flowing through the outlet for technical fluid out of the automatic transmission is pure. The process is then stopped and the level of technical fluid in the automatic transmission is set. However, these solutions for changing technical fluid have several disadvantages.

In particular, the process for changing technical fluid of the automatic transmission with known methods is very time-consuming due to extra work required for disconnecting and connecting the cooling system. Depending on the type of automatic transmission, the process may last about 4-6 hours, which makes changing technical fluid also inefficient and costly. When technical fluid is changed through the cooling system, there is also a threat of later leakages. In addition, the capacity of an electrical pump used for pumping new technical fluid in the automatic transmission is so low that when the vehicle is run on the lifting ramp and, simultaneously, a load is applied to the vehicle by braking and increasing the instantaneous power of the engine, the amount of technical fluid consumed by the automatic transmission is larger than the amount pumped in with the electrical pump. This means that upon changing technical fluid, the amounts of technical fluid pumped in and consumed are unbalanced and the automatic transmission may remain without sufficient amount of oil, which damages the automatic transmission, therefore, changing technical fluid can only be carried out at a low working load. When technical fluid is changed at a low load, the fluid does not flow in the automatic transmission at a speed sufficient for carrying along dirt. Changing technical fluid at a low load extends the time required for the process and depending on the automatic transmission, the used technical fluid flows, due to the low load, back to the automatic transmission and therefore, new technical fluid mixes with used technical fluid. For this reason, some of the used technical fluid that contains wear particles and shortens the service life of the automatic transmission remains inside the automatic transmission also after the process of changing technical fluid.

For example, US6585889B2 describes an oil pan, which purpose is to simplify the manufacture of oil pans and provides for support and location of the filter assembly relative to the oil pan in a cost-effective manner. In this solution, instead of a conventional threaded opening for the oil bath, an unthreaded opening is made, and on the oil filter there is a threaded flange to which the nut is attached along with the seals 58 and the cap. This should then reduce production costs because only a single opening and separate filter with a flange are made. In another example, US2001/047907A1 describes a fluid exchange system, wherein the principle is to control the amount of oil coming in and out through the cooler pipes. I.e., US2001/047907A1 is directed to balancing the rate of flow between the fresh fluid being introduced and the used fluid being extracted.

Consequently, the solutions known from the prior art do not provide a fast and efficient process for changing technical fluid of the automatic transmission and for removing completely the used technical fluid, particles caused by the wear of inner parts of the automatic transmission and other dirt.

### SUMMARY

The objective of the solution according to this invention is to provide a device and method for changing technical fluid of an automatic transmission fast and simply, which, unlike the known solutions, would allow the removal of the particles resulting from the wear and tear of inner parts of the automatic transmission and other dirt from the automatic transmission. The objective of the present invention is achieved by a device and a method for changing technical fluid of an automatic transmission as defined in the appended independent claims to which reference is made to. Advantageous features are set out in the appended dependent claims.

The device and the method according to this invention for changing technical fluid of an automatic transmission provides means for flushing the automatic transmission in the process of changing technical fluid more efficiently and by 1-3 hours faster than the processes known in the prior art. As the amounts of dirt and wear particles washed out in the course of the process are greater, this solution helps to avoid excessive wear of the automatic transmission and therefore increases the operational reliability and service life of the automatic transmission. This invention can be used for flushing different types of hydraulic systems and for changing technical fluid in different types of automatic transmission, comprising continuously variable transmissions, planetary automatic transmissions, dual-clutch automatic transmissions and other automatic transmissions. Additional aspects and advantages of this invention are explained in more detail in the following detailed description of the invention.

### BRIEF DESCRIPTION OF THE DRAWINGS

The invention is explained in more detail with reference to the accompanying drawings, from which
FIG. 1a depicts an embodiment of the adapter plate of the device according to this invention;
FIG. 1b depicts a first embodiment of the joint coupling system of the device according to this invention;
FIG. 1c depicts a second embodiment of the joint coupling system of the device according to this invention;
FIG. 2a is a perspective view of a device according to a first embodiment of this invention for changing technical fluid of an automatic transmission;
FIG. 2b is a perspective view of a device according to a second embodiment of this invention for changing technical fluid of an automatic transmission;
FIG. 2c is a perspective view of a device according to a third embodiment of this invention for changing technical fluid of an automatic transmission;
FIG. 3a - FIG. 3c depict the movability of the joint coupling system of a device according to this invention in accordance with different embodiments of the device;
FIG. 4a depicts a device according to an embodiment of this invention during the removal of used technical fluid;
FIG. 4b depicts a device according to a second embodiment of this invention during the removal of used technical fluid;
FIG. 5 depicts a device according to an embodiment of this invention connected to the means for changing technical fluid and to the automatic transmission of the vehicle.

### DETAILED DESCRIPTION OF EMBODIMENTS

According to the present invention, a device for changing technical fluid of an automatic transmission comprises an adapter plate and a movable joint coupling system, wherein the adapter plate is formed by a housing with a flange corresponding to a bottom of a housing of the automatic transmission, wherein the adapter plate is for replacing the bottom of the housing of the automatic transmission and a technical fluid filter, and is connectable to the housing of the automatic transmission and comprises at least one outlet for used technical fluid and an opening for connecting the movable joint coupling system to the adapter plate, and the movable joint coupling system comprises a joint attachable to the opening, an adapter for attaching the joint to the opening, an external pipe passing through the joint for connecting the device to the tank of new technical fluid and for conducting new technical fluid to the automatic transmission from an opening of the technical fluid filter to the intake of the automatic transmission pump, and wherein the joint is a sleeve with a changeable angle; and a position of the joint coupling system is movable in relation to a vehicle and angles of the external pipe of the joint coupling system are changeable in all directions of xyz-axes.

Attaching the adapter plate of the device for changing technical fluid instead of the bottom of the housing of the automatic transmission and the technical fluid filter provides an opportunity to conduct technical fluid to the circulation of technical fluid in the automatic transmission faster and directly from the tank of new technical fluid. In addition, by using an adapter plate, the technical fluid flowing out of the working automatic transmission during the process of changing technical fluid can be collected and conducted to the tank of used technical fluid through the outlet for used technical fluid. The adapter plate is formed by a housing with a flange corresponding to the bottom of the housing of the automatic transmission, which is connected to the automatic transmission housing instead of the automatic transmission bottom by means of fastenings provided at the flange of the housing and comprises at the bottom of the housing an outlet for used technical fluid and an opening for connecting the movable joint coupling system to the adapter plate.

The adapter plate, which in different embodiments may be provided in the shape of a bath, bowl, etc., has at least one outlet for used technical fluid, which allows a more efficient removal of the used technical fluid from the automatic transmission. In alternative embodiments, a tube or pipe is connected to the outlet for conducting the used technical fluid out, as a result of which it is possible to conduct all of the used technical fluid straight to the collection tank. During the process of changing technical fluid, the amount of new technical fluid conducted into the automatic transmission has to be equal to the amount of fluid removed from it. Collecting all of the used technical fluid in the collection tank helps to assess the required amount of new technical fluid and to adjust the level of new technical fluid after changing the fluid more easily. In other alternative embodiments of the invention, an overflow port is provided at the bottom of the adapter plate housing for adjusting the level of technical fluid, e.g., by using a rod or overflow.

The movable joint coupling system for directing technical fluid to the automatic transmission comprises a joint attachable to the opening of the adapter plate, an adapter for attaching the joint to the opening, an external pipe passing through the joint for connecting the device to the tank of new technical fluid. In an alternative embodiment, the movable joint coupling system further comprises an adapter plate automatic transmission side pipe connected to the automatic transmission side end of the external pipe. To connect the external pipe to the adapter plate automatic transmission side pipe, a quick coupling is used. In different embodiments, the automatic transmission side pipe of the movable joint coupling system is connected to the external pipe either vertically or, in order to spare space, horizontally. As upon changing technical fluid there is often no sufficient space under the automatic transmission for connecting it to a pipe for conducting new technical fluid to the automatic transmission, the movable joint coupling system provides a flexible coupling with an angle changeable in relation to the axis of the opening, which makes it possible to change technical fluid in conditions where the space is limited.

The joint is a sleeve with a changeable angle, e.g., a ball-shaped sleeve formed from two half-spheric components or a flexible sleeve with a changeable angle. A ball-shaped or flexible sleeve with a changeable angle increases the movability of a movable joint coupling system and makes it possible to change the angles of the pipes of the movable joint coupling system and connect the device also to automatic transmissions in which the bottom of the housing is attached to the automatic transmission under an angle and there is less operational space due to that. Consequently, the position of the movable joint coupling system is movable in relation to the vehicle and the angles of the pipes of the movable joint coupling systems are changeable in all directions of the xyz-axes. As a sleeve, also a rubber sleeve can be used which further allows the movement of the movable joint coupling system in relation to the bottom of the housing.

In alternative embodiments of the invention, the one or more quick couplings are attached to the pipes of the movable joint coupling system for connecting the pipes with one another and for connecting the external pipe of the coupling system with the inlet tube for new technical fluid or for connecting the automatic transmission side end of the external pipe or the automatic transmission side end of the automatic transmission side pipe connected to the automatic transmission side end of the external pipe to the intake of the technical fluid pump of the automatic transmission.

In other alternative embodiments of the invention, the device further comprises an adjustable-speed inlet and outlet pump having a capacity of at least 5-50 litres per minute (l/min), wherein the adjustable-speed inlet and outlet pump is connectable to the tank for new technical fluid. An adjustable-speed inlet and outlet pump makes it possible to deliver in the process of changing technical fluid sufficient amounts of technical fluid to the automatic transmissions of different type and also upon loading the automatic transmission, so that entering of air in the system is prevented by delivering a sufficient inflow of technical fluid for the technical fluid pump of the automatic transmission. For that, the capacity of the adjustable-speed inlet and outlet pump should be at least equal to that of the technical fluid pump of the automatic transmission itself. The technical fluid pumps of older types of automatic transmission, e.g., have a capacity of 5-50 l/min, but the capacity of the pumps of newer types of the automatic transmission is 5-30 l/min. Consequently, in different embodiments the capacity of the inlet and outlet pump may be e.g., 5-30 l/min or up to 20-40 l/min, depending on the type of automatic transmission. The adjustability of the speed of the pump allows a faster pumping of new technical fluid depending on the type of automatic transmission than the devices known from the prior art, which in turn makes it possible to apply a greater load to the automatic transmission in the process of changing technical fluid and thereby to flush the particles caused by the inner wear of the automatic transmission and other dirt out of the automatic transmission more efficiently and faster. As a result, the process of changing technical fluid can be carried out from the beginning to the end without any breaks and the automatic transmission is cleaner after the process. Using the pump and applying a load to the automatic transmission upon changing technical fluid is made possible by the movable joint coupling system of the device.

As there is no reserve of about a couple of litres of technical fluid in the automatic transmission if the adapter plate is attached instead of the bottom of the housing of the automatic transmission and the technical fluid pump of the automatic transmission consumes up to 20 litres of technical fluid per minute when the automatic transmission is loaded, the amount of new technical fluid pumped into the automatic transmission when the automatic transmission is loaded has to be sufficient for ensuring a constant supply of technical fluid to the technical fluid pump to prevent air from entering in the system. This can be ensured with a pump with a capacity that at least equals the capacity of the technical fluid pump of the automatic transmission.

The greater the load applied to the automatic transmission, the more intensively the used technical fluid is forced out from the automatic transmission and the more intensively the new technical fluid needs to be delivered in it. The adjustable pump added to the device according to this invention makes it possible to change, in accord with altering the load, the flow of new technical fluid in the automatic transmission. With the pump, a minimum service pressure of the delivered technical fluid is provided, and then the vehicle is started. As soon as the amount of technical fluid consumed by the automatic transmission exceeds the output capacity of the pump, the automatic transmission receives a required amount of new technical fluid not through the inlet pump, but by means of the activation of the bypass valve in the inlet device, which renders it possible to bypass the pump and take new technical fluid straight from the tank of new technical fluid. In this embodiment, new technical fluid is not pumped in the automatic transmission but the transmission aspirates new technical fluid itself.

Pumping up the pressure of new technical fluid before starting the engine of the vehicle also provides an opportunity to change technical fluid in automatic transmissions where underpressure remains insufficient to allow the air pressure push new technical fluid to a height required by the automatic transmission for aspirating new technical fluid itself. Therefore, new technical fluid needs to be delivered to the automatic transmission, after which the automatic transmission can start aspirating new technical fluid from below.

In alternative embodiments of the device, the device may further comprise an extra pipe with a valve. By using an extra pipe with a valve, e.g., an overpressure valve, the process for changing technical fluid may also be carried out in a way where upon loading the automatic transmission, the latter aspirates new technical fluid straight from the tank of new technical fluid through the inlet tube without additional operation of the pump. As the pump continuously provides more, the overpressure valve ensures that the amount of new technical fluid forced into the automatic transmission is not excessive, but the overpressure is maintained continuously until the pump starts to aspirate itself.

In an alternative embodiment of the device, it is further equipped with another extra tube through which the automatic transmission can intake new technical fluid directly, without the pump, and/or an outlet tube for draining the used technical fluid is provided at the bottom of the adapter plate housing for collecting used technical fluid. If the used technical fluid leaving the automatic transmission does not drain out of the adapter plate sufficiently fast, the outlet tube is directed through the pump in order to collect the used technical fluid by means of the pump faster.

The method according to this solution for changing technical fluid of an automatic transmission comprises assessment of the condition of the automatic transmission, wherein the assessment of the condition of the automatic transmission comprising analyzing error codes of the automatic transmission; increasing a temperature of used technical fluid in the automatic transmission in different modes; assessing fault parameters of the automatic transmission; and on the basis of the assessment, changing the technical fluid with a device according to claim 1, wherein removing the used technical fluid from the automatic transmission, flushing the automatic transmission with new technical fluid and filling the automatic transmission with new technical fluid, wherein during the removal of used technical fluid from the automatic transmission and filling the automatic transmission with new technical fluid the automatic transmission is loaded.

The step of analysing the error codes of the automatic transmission is performed by using a diagnostic computer, more specifically comprising reading the error codes in the control unit of the automatic transmission of the vehicle with a diagnostic computer and performing a test drive for receiving additional information so as to detect possible faults of the automatic transmission. By connecting a diagnostic computer to the control unit of the automatic transmission the degree to which the control unit has adjusted the automatic transmission can be assessed and the adaptation values can be identified. While assessing the adaptation values, the degree to which the automatic transmission is worn can be identified, comprising, e.g., how much the actuator, conduits of technical fluid, surfaces of seals, clutch disks, control valves, the piston and other parts of the automatic transmission are worn.

In the step of increasing the temperature of used technical fluid of the automatic transmission in different modes, the temperature of technical fluid is increased by gradually applying a load on the automatic transmission. By loading the automatic transmission the temperature of technical fluid is increased, which decreases the viscosity of technical fluid and as a result, a greater amount of the used technical fluid can be drained out, also the particles caused by the wear of inner parts of the automatic transmission and other dirt can be removed.

The step of assessing the fault parameters of the automatic transmission is performed by loading the automatic transmission. In the step of assessing the fault parameters of the automatic transmission the automatic transmission is loaded by starting the engine and keeping the vehicle stationary or driving it. Depending on the type of automatic transmission, applying a load is carried out differently. For loading the automatic transmissions having a torque converter and increasing the temperature of technical fluid, the brake of the stationary vehicle with its engine running is activated, the gear is set in drive and the engine speed is increased. However, the load on the automatic transmission is increased gradually in order to ensure that technical fluid of the automatic transmission warms steadily. For loading an automatic transmission having a wet or dry clutch and increasing the temperature of its technical fluid, the vehicle under a load is accelerated from the spot for several times, resulting in an increase of the temperature of the technical fluid of the automatic transmission to approximately 80-100 °C, e.g., 90-95 °C.

When the automatic transmission is loaded more intensively, the temperature of technical fluid increases, its viscosity decreases with the increase of the temperature and it starts flowing more freely. In this case, any wear of the seals of the automatic transmission, the hydraulic unit and clutches or failures caused by other damage manifest themselves more easily. Upon normal driving where the temperature of technical fluid is 60-70 °C, e.g., the major problems of the automatic transmission do not reveal itself, but when the automatic transmission is under a more intensive load (e.g., driving off-road, starting the automatic transmission in the start-stop mode, carrying a loaded trailer, etc.) and the temperature of technical fluid increases above 95 °C and in more extreme cases even above 120 °C, the faults of the automatic transmission become evident (e.g., vibration, deteriorated gear shifting or clutch engagement, engine speed fluctuation, buzzing) that are caused by the inner defects of the automatic transmission. All this provides an opportunity to assess the inner impermeability of the automatic transmission.

By driving the vehicle the technical fluid of the automatic transmission is tested at different temperatures, i.e., in cold (up to 20-30 °C), warm (up to 80 °C) and hot (above 80 °C) conditions, and different loads (mild acceleration, average acceleration, intensive acceleration, slowing down, i.e., upgrading and downgrading the engine with and without a load, e.g., the vehicle running freely downhill). In addition to inner leakages of the automatic transmission, also the faults related to gear changing of the automatic transmission can be identified this way.

In different embodiments, assessing the fault parameters of the automatic transmission comprises not only loading the automatic transmission, but also its computerised diagnostics, for which a diagnostic computer is connected to the control unit of the automatic transmission in order to check the power characteristics of the automatic transmission control valves generated by the vehicle and identify the ways how the vehicle controls the automatic transmission itself. This way, the electric currency used for engaging the clutch is measured and based on that, the wear of the automatic transmission is assessed. Also, the diagnostic computer is used to test the relative values of different speed sensors of the automatic transmission, e.g., the value of the input shaft speed relative to the value of the engine's crankshaft speed. When the speed frequency of the engine is, e.g., 2000 rpm, the rotation achieved by the automatic transmission in the case of a torque converter clutches is by 30-90 rpm lower than usual. In that manner the operation of the hydraulic clutch and the slip of the continuously variable transmission and direct-shift automatic transmissions is assessed. To detect vibration in the automatic transmission, the ratio of the linear velocity of the motor shaft to that of the input shaft or the linear velocity of the input shaft to that of the output shaft is measured with the diagnostic computer and based on that, the condition of the transmission's torque of the hydraulic clutch or the continuously variable transmission is assessed.

By assessing the condition of the automatic transmission it is established whether the change of technical fluid of the automatic transmission can be carried out or the automatic transmission of the vehicle needs repairs. Based on the assessment of the condition of the automatic transmission, technical fluid is exchanged by means of a device according to this invention, in the course of which the used technical fluid is removed from the automatic transmission, the automatic transmission is flushed and filled with new technical fluid, wherein upon the removal of used technical fluid from the automatic transmission and flushing the automatic transmission with new technical fluid the automatic transmission is kept loaded.

For changing technical fluid of the automatic transmission, the vehicle is driven on a lifting ramp, its engine is stopped, a device is connected to the technical fluid circulation of the automatic transmission for pumping the used technical fluid out of the automatic transmission and for conducting new technical fluid into it, after which the vehicle is started and the automatic transmission is loaded by running the engine while the vehicle is not moving. When connecting the device to the technical fluid circulation of the automatic transmission, the bottom of the housing below the automatic transmission is replaced with an adapter plate having at least two openings, through one of which new technical fluid is conducted to the automatic transmission and through the other used technical fluid is drained out of the automatic transmission. When new technical fluid is conducted to the automatic transmission, it forces used technical fluid out of the automatic transmission through the outlet for used technical fluid in the adapter plate of the device.

Through the adapter plate, the means for changing technical fluid are connected to the circulation of technical fluid in the automatic transmission. The automatic transmission is supplied with new technical fluid by means of a pump. While running the vehicle's engine with new technical fluid without the vehicle moving but the automatic transmission working, used technical fluid is forced out of the automatic transmission by new technical fluid conducted to the automatic transmission.

For loading the automatic transmission of the vehicle that is on the lifting ramp, the automatic transmission is operated, depending on the type of it, from the beginning to the end (e.g., in the case of the continuously variable transmission) or through all the gears of the automatic transmission. For that purpose, depending on the type of automatic transmission, at least 2-3 litres of new technical fluid is pumped to the bottom of the automatic transmission through the inlet for technical fluid of the adapter plate so that the automatic transmission is supplied with a sufficient amount of new technical fluid, or new technical fluid is pumped in the automatic transmission at the same speed as used technical fluid is pumped out by the automatic transmission. In the step of flushing the automatic transmission with new technical fluid comprises loading the automatic transmission 5 to 50 seconds, i.e., upon changing technical fluid, the automatic transmission is loaded 5 to 50 seconds, e.g., 5, 10, 15, 20, 25, 30, 35, 40 or 45 seconds up to 10, 15, 20, 25, 30, 35, 40, 45 or 50 seconds. In this period, all of the technical fluid of the automatic transmission is replaced.

When driving through all the gears of the automatic transmission, new technical fluid is conducted to the parts of the automatic transmission, comprising clutches, shafts, actuators. In order to ensure a better result, the gears are not driven through steadily, but a load is applied to the automatic transmission. More intensive driving of the vehicle on a lifting ramp also results in a more intensive flow of technical fluid in the automatic transmission, which means that the dirt on the inner walls of the automatic transmission and the particles caused by wear are more efficiently carried along with the used technical fluid that is forced out of the automatic transmission, resulting in a cleaner automatic transmission after the change of technical fluid. In order to change technical fluid in an automatic transmission with a torque converter which holds 3-4 litres of technical fluid, e.g., the transmission needs to be loaded heavily without the vehicle moving, just as the temperature is increased in the automatic transmission. For loading the automatic transmission, the brake of the vehicle is activated, the gear is set in drive and the engine speed is increased, while the pump wheel of the torque converter on the automatic transmission side moves as fast as the engine's crankshaft, the turbine wheel on the automatic transmission side is not moving and between these there is a strong dynamic flow of the technical fluid of the automatic transmission, which carries along dirt from the inside of the automatic transmission and its parts. At the same time, new technical fluid also continuously flows in the turbine and the used technical fluid flows out of it. This is the best way to clean the torque converter. The load is applied until the technical fluid flowing out of the automatic transmission is clearly the supplied new and clean technical fluid. By then, the entire automatic transmission is also filled with new technical fluid.

In an alternative embodiment of this solution, new technical fluid is conducted to the automatic transmission through the inlet for new technical fluid in the adapter plate at the location where the automatic transmission aspirates new technical fluid itself when the vehicle and the automatic transmission are in operation. The use of the adapter plate allows the automatic transmission to aspirate new technical fluid depending on how intensively the automatic transmission is loaded.

As the tank for new technical fluid may also contain some sediment or other dirt, in a further alternative embodiment of the device and method new technical fluid supplied to the automatic transmission is pre-filtered for achieving a purer inner space of the automatic transmission or a filter is provided at the tank for new technical fluid for purifying new technical fluid when it is conducted to the automatic transmission.

### DETAILED DESCRIPTION OF THE DRAWINGS

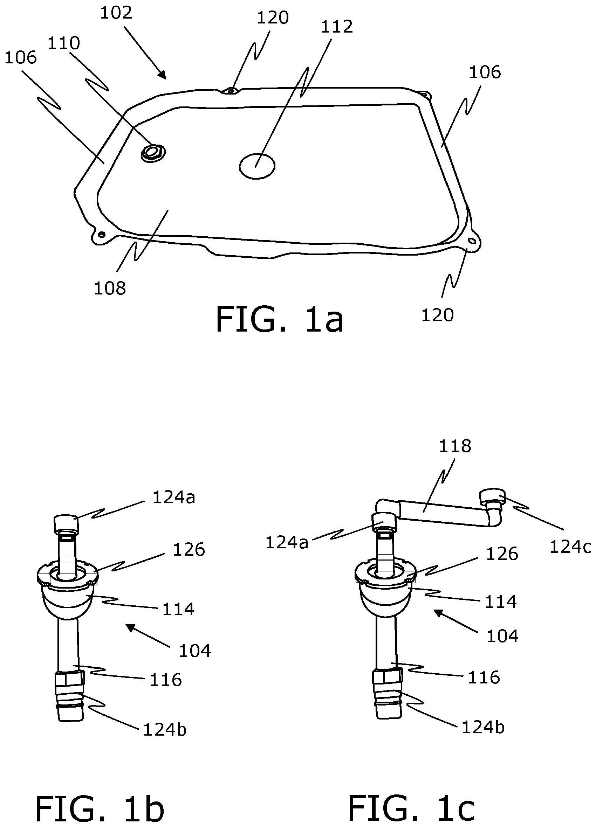

FIG. 1a depicts an embodiment of the adapter plate **102** of the device according to this invention. The adapter plate **102** is formed by a housing **108** with a flange **106** corresponding to the bottom of the housing of the automatic transmission, which is connected to the automatic transmission housing instead of the bottom of the housing of the automatic transmission and a technical fluid filter by means of fastenings **120** attached to the flange **106** and comprises at the bottom of the housing **108** an outlet **110** for used technical fluid and an opening **112** for connecting the movable joint coupling system to the adapter plate **102.**

FIG. 1b depicts an embodiment of the movable joint coupling system **104** of the device according to this invention. The movable joint coupling system **104** comprises a joint **114** attachable to the opening **112,** an external pipe **116** passing through the joint for connecting the device to the tank of new technical fluid, an adapter **126** for attaching the joint **114** to the opening **112.** A quick coupling **124a** is attached to the upper end of the external pipe **116** and a further quick coupling **124b** is attached to the lower end of it.

FIG. 1c depicts a second embodiment of the movable joint coupling system **104** of the device according to this invention, wherein the movable joint coupling system **104** of FIG. 1 further comprises an adapter plate automatic transmission side pipe **118** attachable to the upper end, more precisely to the automatic transmission side end of the external pipe **116.** The external pipe **116** is connected to the adapter plate automatic transmission side pipe **118** by means of a quick coupling **124a.** A quick coupling **124c** is attached to the automatic transmission pump side end of the adapter plate automatic transmission side pipe **118.**

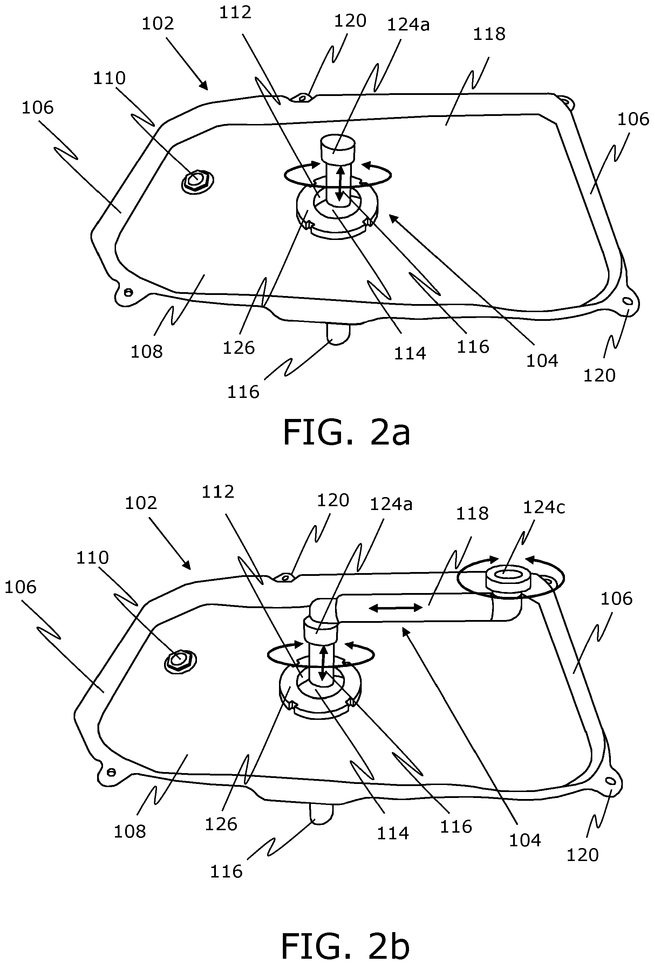

FIG. 2a is a perspective view of a device according to an embodiment of the invention for changing technical fluid of an automatic transmission. The device comprises an adapter plate **102** and a movable joint coupling system **104.** The adapter plate **102** is formed by a housing **108** with a flange **106** corresponding to the bottom of the housing of the automatic transmission, which is connected to the automatic transmission housing instead of the bottom of the housing of the automatic transmission and a technical fluid filter by means of fastenings **120** attached to the flange **106** and comprises at the bottom of the housing **108** an outlet **110** for used technical fluid and an opening **112** for connecting the movable joint coupling system **104** to the adapter plate **102.** The movable joint coupling system **104** comprises a joint **114** attachable to the opening **112,** an adapter **126** for attaching the joint **114** to the opening **112,** an external pipe **116** passing through the joint for connecting the device to the tank of new technical fluid and for conducting new technical fluid to the automatic transmission from the opening for the technical fluid filter to the intake of the automatic transmission pump, and a quick coupling **124a** attached to the pipe **116.**

FIG. 2b is a perspective view of a device according to a second embodiment of the invention for changing technical fluid of an automatic transmission. The device comprises an adapter plate **102** and a movable joint coupling system **104.** The adapter plate **102** is formed by a housing **108** with a flange **106** corresponding to the bottom of the housing of the automatic transmission, which is connected to the automatic transmission housing instead of the bottom of the housing of the automatic transmission crankcase and a technical fluid filter by means of fastenings **120** attached to the flange **106** and comprises at the bottom of the housing **108** an outlet **110** for used technical fluid and an opening **112** for connecting the movable joint coupling system **104** to the adapter plate **102.** The movable joint coupling system **104** comprises a joint **114** attachable to the opening **112,** an adapter **126** for attaching the joint **114** to the opening **112,** an external pipe **116** passing through the joint for connecting the device to the tank of new technical fluid, and an adapter plate automatic transmission side pipe **118** connected horizontally to the external pipe for conducting new technical fluid from the opening of the technical fluid filter to the intake of the automatic transmission pump. The external pipe **116** is connected to the adapter plate automatic transmission side pipe **118** by means of a quick coupling **124a.** A quick coupling **124c** is attached to the automatic transmission pump end of the adapter plate automatic transmission side pipe **118.**

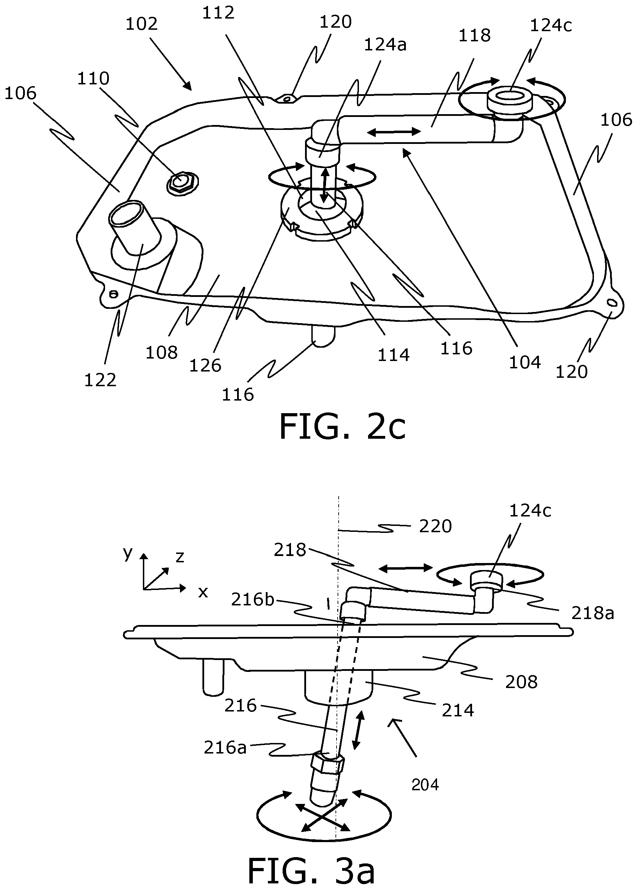

FIG. 2c is a perspective view of a device for changing technical fluid of an automatic transmission according to a third embodiment of the invention, wherein the embodiment provided in FIG. 1b further comprises an overflow port **122** provided at the bottom of the adapter plate housing **108** for adjusting the level of technical fluid.

FIG. 3a - FIG. 3c depict examples of the movability of the movable joint coupling system of the device by means of the joint **214** attached to the opening according to different embodiments of the device, wherein respective arrows indicate the possible movement of the external pipe **216** of the movable joint coupling system, the lower end (in relation to the vehicle) **216a** and the upper end **216b** of the external pipe, the adapter plate automatic transmission side pipe **218** connected horizontally to the upper end **216a,** and the end of the adapter plate automatic transmission side pipe **218a** in all directions of xyz-axes.

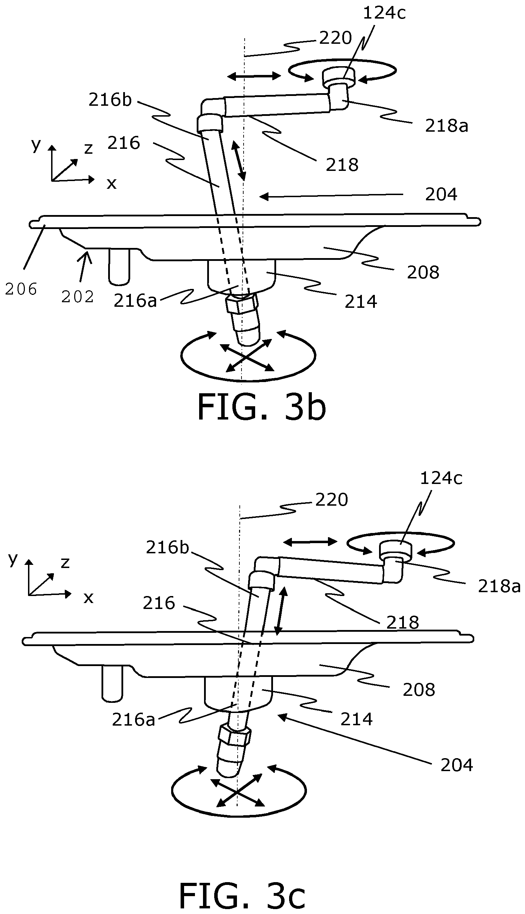

FIG. 3a depicts a movable joint coupling system **204** in one of the lower positions of the movable joint coupling system in relation to the vehicle, so that the external pipe **216** is at a first angle to the axis **220** of the opening and the automatic transmission side pipe **218** connected horizontally to the upper end **216b** of the external pipe is arranged to the location where there is sufficient space under the automatic transmission. FIG. 3b depicts a movable joint coupling system **204** in one of the upper positions of the movable joint coupling system in relation to the vehicle, so that the external pipe **216** is at a second angle to the axis **220** of the opening and the automatic transmission side pipe **218** connected horizontally to the upper end **216b** of the external pipe is arranged to the location where there is sufficient space under the automatic transmission. FIG. 3c depicts a movable joint coupling system **204** in one of the middle positions of the movable joint coupling system in relation to the vehicle, so that the external pipe **216** is at a third angle to the axis **220** of the opening and the automatic transmission side pipe **218** connected horizontally to the upper end **216b** of the external pipe is arranged to the location where there is sufficient space under the automatic transmission.

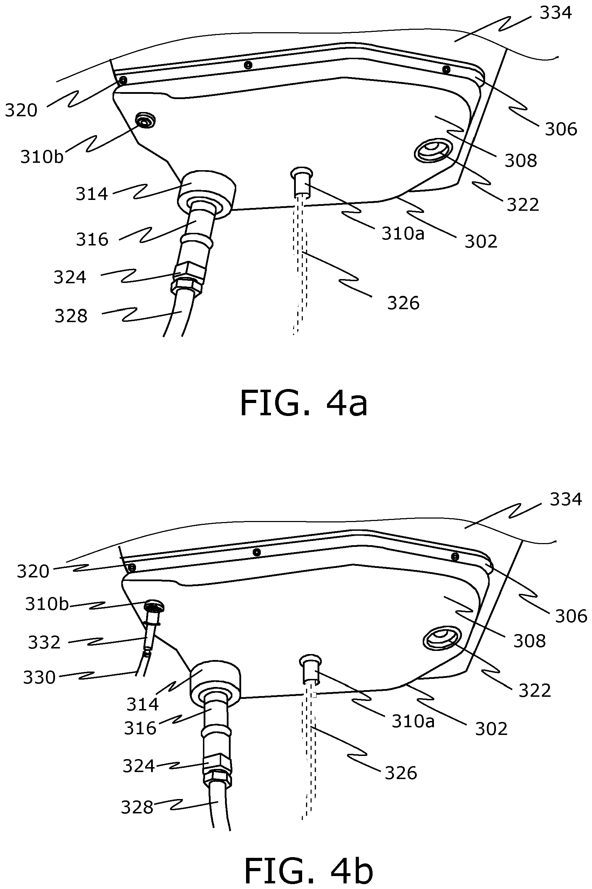

FIG. 4a and FIG. 4b depict the device according to the embodiments where it is connected to the automatic transmission **334** of the vehicle. According to the depicted embodiment, the device comprises an adapter plate **302** with fastenings **320** for attaching the device with a flange **306** to the automatic transmission **334** and a first outlet **310a** for used technical fluid provided at the bottom of the adapter plate housing **308,** a further outlet **310b** for used technical fluid, a joint **314** attached through the opening, a movable joint coupling system attached through the joint **314,** a quick coupling **324** attached to the external pipe **316,** an inlet tube **328** for new technical fluid connected to the quick coupling. FIG. 4a depicts an opened first outlet **310a** for used technical fluid for conducting used technical fluid **326** out of the automatic transmission. FIG. 4b depicts an extra pipe **332** with a valve connected to the outlet for technical fluid **326** to which an outlet tube **330** for used technical fluid is connected. The embodiments provided in FIG. 4a and FIG. 4b further comprises an overflow port **322** provided at the bottom of the adapter plate housing **308** for adjusting the level of technical fluid.

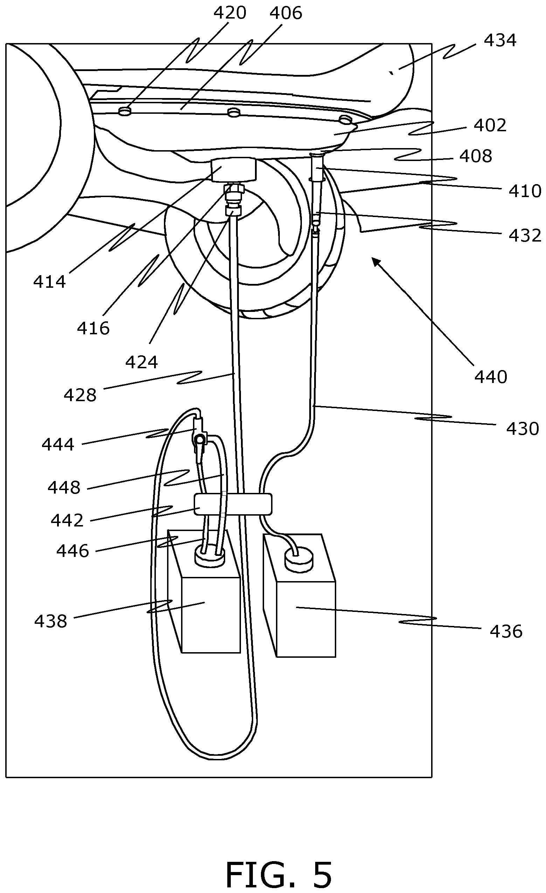

FIG. 5 depicts an embodiment of the device of the invention, wherein the device, which comprises an adapter plate **402** with a flange **406,** is attached by means of the fastenings **420** provided at the flange **406** to the bottom of the housing of the automatic transmission **434** of the vehicle **440** driven onto the lifting ramp. To the outlet **410** for used technical fluid at the bottom of the adapter plate housing **408,** an extra pipe **432** with a valve is attached to which a technical fluid outlet tube **430** is connected that has been directed to a technical fluid collection tank **436** through a pump **442.** To the quick coupling **424,** which is attached to the external pipe **416** passing through the joint **414** connected to the opening at the bottom of the adapter plate housing **408,** an inlet tube **428** for new technical fluid is attached through which new technical fluid is conducted from the tank **438** of new technical fluid to the automatic transmission **434** by means of the pump **442,** which is used, depending on the type of automatic transmission, either for pumping new technical fluid through the pipe **446** connected to the pump **442,** through the coupling **444** with a tap, the inlet tube **428** for technical fluid and the device according to this invention into the automatic transmission or for building up the pressure of new technical fluid so that upon starting the vehicle, the automatic transmission would begin to aspirate new technical fluid from the tank **438** of new technical fluid through a second pipe **448** for technical fluid, the coupling **444** with a tap and the inlet tube **428** for technical fluid.

## Claims

1. A device for changing technical fluid of an automatic transmission, wherein the device comprises an adapter plate (102, 202, 302, 402) and a movable joint coupling system (104, 204), wherein the adapter plate (102, 202, 302, 402) is formed by a housing (108, 208, 308, 408) with a flange (106, 206, 306, 406) corresponding to a bottom of a housing of the automatic transmission (334, 434), wherein the adapter plate is for replacing the bottom of the housing of the automatic transmission and a technical fluid filter, and is connectable to the housing of the automatic transmission (334, 434) and comprises at least one outlet (110, 310a, 310b, 410) for used technical fluid and an opening (112) for connecting the movable joint coupling system (104, 204) to the adapter plate (102, 202, 302, 402), and the movable joint coupling system (104, 204) comprises a joint (114, 214, 314, 414) attachable to the opening (112), an adapter (126) for attaching the joint to the opening, an external pipe (116, 216, 316, 416) passing through the joint for connecting the device to a tank (438) of new technical fluid and for conducting new technical fluid to the automatic transmission from an opening of the technical fluid filter to the intake of the automatic transmission pump, and wherein the joint is a sleeve with a changeable angle; and a position of the joint coupling system is movable in relation to a vehicle and angles of the external pipe of the joint coupling system are changeable in all directions of xyz-axes.

2. The device according to claim 1, wherein the joint coupling system further comprises an adapter plate automatic transmission side pipe (118, 218) which is connected to the automatic transmission (334, 434) side end of the external pipe (116, 216, 316, 416).

3. The device according to any of the preceding claims, wherein the joint is a ball-shaped sleeve formed from two half-spheric components or a flexible sleeve with a changeable angle.

4. The device according to any of the preceding claims, wherein one or more quick couplings (124a, 124b, 124c, 324, 424) are attached to the pipes of the movable joint coupling system (104, 204).

5. The device according to any of the preceding claims, wherein the device further comprises an adjustable-speed inlet and outlet pump (442) having a capacity of at least 5-50 l/min, wherein the adjustable-speed inlet and outlet pump (442) is connectable to the tank (438) for new technical fluid.

6. The device according to any of the preceding claims, wherein the device further comprises an extra pipe (332, 432) with a valve.

7. A method for changing technical fluid of an automatic transmission comprising the assessment of the condition of the automatic transmission, wherein the assessment of the condition of the automatic transmission comprises
- analyzing error codes of the automatic transmission;
- increasing a temperature of used technical fluid in the automatic transmission in different modes;
- assessing fault parameters of the automatic transmission; and
- on the basis of the assessment, changing the technical fluid with a device according to claim 1, wherein
- removing the used technical fluid from the automatic transmission,
- flushing the automatic transmission with new technical fluid and filling the automatic transmission with new technical fluid, wherein during the removal of used technical fluid from the automatic transmission and filling the automatic transmission with new technical fluid the automatic transmission is loaded.

8. The method according to claim 7, wherein analysing the error codes of the automatic transmission is performed by using a diagnostic computer.

9. The method according to claim 7 or 8, wherein assessing the fault parameters of the automatic transmission is performed by loading the automatic transmission.

10. The method according to any of claims 7-9, wherein flushing the automatic transmission with new technical fluid comprises loading the automatic transmission 5 to 50 seconds.

## Patentansprüche

1. Vorrichtung zum Wechseln von technischem Fluid eines Automatikgetriebes, wobei die Vorrichtung eine Adapterplatte (102, 202, 302, 402) und ein bewegliches Gelenkkupplungssystem (104, 204) umfasst, wobei die Adapterplatte (102, 202, 302, 402) durch ein Gehäuse (108, 208, 308, 408) mit einem Flansch (106, 206, 306, 406) ausgebildet ist, der einem Boden eines Gehäuses des Automatikgetriebes (334, 434) entspricht, wobei die Adapterplatte zum Ersetzen des Bodens des Gehäuses des Automatikgetriebes und eines Filters für technisches Fluid dient und mit dem Gehäuse des Automatikgetriebes (334, 434) verbindbar ist und mindestens einen Auslass (110, 310a, 310b, 410) für verbrauchtes technisches Fluid und eine Öffnung (112) zum Verbinden des beweglichen Gelenkkupplungssystems (104, 204) mit der Adapterplatte (102, 202, 302, 402) umfasst, und das bewegliche Gelenkkupplungssystem (104, 204) ein Gelenk (114, 214, 314, 414), das an der Öffnung (112) angebracht werden kann, einen Adapter (126) zum Anbringen des Gelenks an der Öffnung, ein externes Rohr (116, 216, 316, 416), das durch das Gelenk verläuft, zum Verbinden der Vorrichtung mit einem Tank (438) mit neuem technischen Fluid und zum Leiten von neuem technischen Fluid zu dem Automatikgetriebe von einer Öffnung des Filters für technisches Fluid zu dem Einlass der Automatikgetriebepumpe, umfasst, und wobei das Gelenk eine Hülse mit einem veränderbaren Winkel ist; und eine Position des Gelenkkupplungssystems in Bezug auf ein Fahrzeug beweglich ist, und Winkel des Außenrohrs des Gelenkkupplungssystems in alle Richtungen der XYZ-Achsen veränderbar sind.

2. Vorrichtung nach Anspruch 1, wobei das Gelenkkupplungssystem ferner eine Adapterplatte für das Automatikgetriebeseitenrohr (118, 218) umfasst, die mit dem Automatikgetriebe (334, 434)-Seitenende des externen Rohrs (116, 216, 316, 416) verbunden ist.

3. Vorrichtung nach einem der vorstehenden Ansprüche, wobei das Gelenk eine kugelförmige Hülse aus zwei halbkugelförmigen Bestandteilen oder eine flexible Hülse mit veränderbarem Winkel ist.

4. Vorrichtung nach einem der vorstehenden Ansprüche, wobei eine oder mehrere Schnellkupplungen (124a, 124b, 124c, 324, 424) an den Rohren des beweglichen Gelenkkupplungssystems (104, 204) angebracht sind.

5. Vorrichtung nach einem der vorstehenden Ansprüche, wobei die Vorrichtung ferner eine Einlass- und Auslasspumpe (442) mit einstellbarer Geschwindigkeit, die eine Kapazität von mindestens 5-50 l/min aufweist, umfasst, wobei die Einlass- und Auslasspumpe (442) mit einstellbarer Geschwindigkeit mit dem Tank (438) für neues technisches Fluid verbindbar ist.

6. Vorrichtung nach einem der vorstehenden Ansprüche, wobei die Vorrichtung ferner ein zusätzliches Rohr (332, 432) mit einem Ventil umfasst.

7. Verfahren zum Wechseln von technischem Fluid eines Automatikgetriebes, umfassend die Beurteilung des Zustands des Automatikgetriebes, wobei die Beurteilung des Zustands des Automatikgetriebes umfasst
- Analysieren von Fehlercodes des Automatikgetriebes;
- Ansteigen einer Temperatur von verwendetem technischen Fluid in dem Automatikgetriebe in unterschiedlichen Modi;
- Beurteilen von Fehlerparametern des Automatikgetriebes; und
- auf der Basis der Bewertung, Wechseln des technischen Fluids mit einer Vorrichtung nach Anspruch 1, wobei
- Entfernen des verbrauchten technischen Fluids aus dem Automatikgetriebe,
- Spülen des Automatikgetriebes mit neuem technischen Fluid und Füllen des Automatikgetriebes mit neuem technischen Fluid, wobei während des Entfernens von verbrauchtem technischen Fluid aus dem Automatikgetriebe und des Füllens des Automatikgetriebes mit neuem technischen Fluid das Automatikgetriebe beladen wird.

8. Verfahren nach Anspruch 7, wobei ein Analysieren der Fehlercodes des Automatikgetriebes durch Verwenden eines Diagnosecomputers durchgeführt wird.

9. Verfahren nach Anspruch 7 oder 8, wobei das Beurteilen der Fehlerparameter des Automatikgetriebes durch Beladen des Automatikgetriebes erfolgt.

10. Verfahren nach einem der Ansprüche 7 bis 9, wobei das Spülen des Automatikgetriebes mit neuem technischen Fluid das Beladen des Automatikgetriebes für 5 bis 50 Sekunden umfasst.

## Revendications

1. Dispositif permettant de changer un fluide technique d'une transmission automatique, dans lequel le dispositif comprend une plaque d'adaptation (102, 202, 302, 402) et un système d'accouplement à raccord mobile (104, 204), dans lequel la plaque d'adaptation (102, 202, 302, 402) est formée par un logement (108, 208, 308, 408) avec un rebord (106, 206, 306, 406) correspondant à un fond d'un logement de la transmission automatique (334, 434), dans lequel la plaque d'adaptation sert à remplacer le fond du logement de la transmission automatique et un filtre à fluide technique, et peut être raccordé au logement de la transmission automatique (334, 434) et comprend au moins une sortie (110, 310a, 310b, 410) destinée au fluide technique usagé et une ouverture (112) permettant de raccorder le système d'accouplement à raccord mobile (104, 204) à la plaque d'adaptation (102, 202, 302, 402), et le système d'accouplement à raccord mobile (104, 204) comprend un raccord (114, 214, 314, 414) pouvant être fixé à l'ouverture (112), un adaptateur (126) permettant de fixer le raccord à l'ouverture, un tuyau externe (116, 216, 316, 416) passant à travers le raccord permettant de connecter le dispositif à un réservoir (438) de nouveau fluide technique et permettant d'acheminer le nouveau fluide technique vers la transmission automatique à partir d'une ouverture du filtre à fluide technique vers l'admission de la pompe de transmission automatique, et dans lequel le raccord est un manchon avec un angle pouvant changer ; et une position du système d'accouplement à raccord peut être déplacée par rapport à un véhicule et les angles du tuyau externe du système d'accouplement à raccord peuvent changer dans toutes les directions des axes xyz.

2. Dispositif selon la revendication 1, dans lequel le système d'accouplement à raccord comprend en outre un tuyau de plaque d'adaptation côté transmission automatique (118, 218) qui est raccordé à l'extrémité côté transmission automatique (334, 434) du tuyau externe (116, 216, 316, 416).

3. Dispositif selon l'une quelconque des revendications précédentes, dans lequel le raccord est un manchon en forme de bille formé de deux composants demi-sphériques ou un manchon flexible avec un angle pouvant changer.

4. Dispositif selon l'une quelconque des revendications précédentes, dans lequel un ou plusieurs raccords rapides (124a, 124b, 124c, 324, 424) sont fixés aux tuyaux du système d'accouplement à raccord mobile (104, 204).

5. Dispositif selon l'une quelconque des revendications précédentes, dans lequel le dispositif comprend en outre une pompe d'entrée et sortie à vitesse réglable (442) ayant une capacité d'au moins 5 à 50 l/min, dans lequel la pompe d'entrée et sortie à vitesse réglable (442) peut être raccordée au réservoir (438) pour nouveau fluide technique.

6. Dispositif selon l'une quelconque des revendications précédentes, dans lequel le dispositif comprend en outre un tuyau supplémentaire (332, 432) avec une vanne.

7. Procédé permettant de changer un fluide technique d'une transmission automatique comprenant l'évaluation de la condition de la transmission automatique, dans lequel l'évaluation de la condition de la transmission automatique comprend
- l'analyse de codes d'erreur de la transmission automatique ;
- l'augmentation d'une température de fluide technique usagé dans la transmission automatique dans différents modes ;
- l'évaluation de paramètres de défaut de la transmission automatique ; et
- en fonction de l'évaluation, le changement du fluide technique avec un dispositif selon la revendication 1, dans lequel
- on retire le fluide technique usagé de la transmission automatique,
- on rince la transmission automatique avec du nouveau fluide technique et on remplit la transmission automatique avec le nouveau fluide technique, dans lequel pendant le retrait du fluide technique usagé de la transmission automatique et le remplissage de la transmission automatique avec du nouveau fluide technique la transmission automatique est chargée.

8. Procédé selon la revendication 7, dans lequel l'analyse des codes d'erreur de la transmission automatique est mise en oeuvre en utilisant un ordinateur de diagnostic.

9. Procédé selon la revendication 7 ou 8, dans lequel l'évaluation des paramètres de défaut de la transmission automatique est mise en oeuvre en chargeant la transmission automatique.

10. Procédé selon l'une quelconque des revendications 7 à 9, dans lequel le rinçage de la transmission automatique avec du nouveau fluide technique comprend le chargement de la transmission automatique pendant 5 à 50 secondes.
